# FASCICULE DE BREVET EUROPEEN

(11) **EP 2 340 196 B1**
(45) Date de publication et mention de la délivrance du brevet: **27.03.2013**
(21) Numéro de dépôt: 09753142.0
(22) Date de dépôt: 26.10.2009
(51) Int. Cl.: B62D 65/06, B05B 13/02

(54) **ECARTEUR DE PORTE POUR LIGNE D'ASSEMBLAGE DE VEHICULES**
TÜRABSTANDSSTÜCK FÜR EINE FAHRZEUGPRODUKTIONSLINIE
DOOR SPACER FOR A VEHICLE ASSEMBLY LINE

(30) Priorité: 27.10.2008 FR 0805954
(43) Date de publication de la demande: 06.07.2011
(73) Titulaire: Coutier Industrie S.A.R.L., 57970 Basse Ham (FR)
(72) Inventeur: COUTIER, Charles, F-57570 Cattenom (FR)
(74) Mandataire: Lavialle, Bruno François Stéphane
(86) Numéro de dépôt international: PCT/FR2009/001248
(87) Numéro de publication internationale: WO 2010/049606

(56) Documents cités:
- WO-A-2006/123078
- FR-A- 2 854 862

## Description

La présente invention concerne un bâti destiné à associer provisoirement une porte de véhicule à la caisse de celui-ci notamment sur une ligne d'assemblage de véhicules.

Le dispositif est également appelé écarteur.

Afin de pouvoir correctement revêtir par peinture une caisse de véhicule et ses portes, il convient de les associer au moyen d'un dispositif de liaison qui permet un mouvement de la porte parallèlement à elle-même (et à l'ouverture de la caisse qui doit l'accueillir) et, éventuellement, un mouvement de pivotement de la porte autour d'un axe d'articulation sensiblement vertical, pour pouvoir accéder soit à l'intérieur de la caisse par l'ouverture de la porte, soit à la face interne de cette porte.

La position relative de la caisse et de la porte doit être correctement assurée, au moins lorsque la porte est située à proximité de l'ouverture à obturer. La précision de cette position est requise notamment pour des questions de distance à conserver entre la surface à peindre et le pistolet de peinture et également pour maîtriser les effets "d'ombre" induits par le décalage des surfaces peintes en même temps au regard de la direction de projection de la peinture.

### ARRIERE-PLAN DE L'INVENTION

Les dispositifs ou bâtis actuels sont formés par deux cadres articulés l'un à l'autre au moyen de deux leviers intermédiaires qui forment avec les deux cadres un parallélogramme articulé.

L'un des cadres possède des moyens pour sa fixation à la caisse du véhicule au niveau de l'ouverture de portière. L'autre cadre possède des moyens pour supporter la porte elle-même. Dans certaines applications ces moyens de support comportent un troisième cadre articulé au second qui lui supporte la porte.

Ces structures de bâti de montage sont réalisées le plus souvent par une technique de mécano soudure dont les tolérances d'exécution sont importantes pour maîtriser les prix de revient. En particulier les pivots d'articulation des cadres entre eux sont du genre charnière de porte avec des gonds coopérant avec l'oeil d'une paumelle ou d'une penture. La précision des assemblages par soudure de ces gonds et paumelles requiert de ménager un jeu important entre le charnon et l'oeil, jeu qui nuit à la précision de la position relative des cadres et donc de celle du panneau de porte et de la caisse. Or celle-ci doit être grande au moins dans le cas ou les cadres sont rabattus les uns sur les autres et la porte voisine de son ouverture. En outre ce jeu important forme un interstice qui se remplit du produit du traitement de la caisse (peinture, décapant...) qui conduit rapidement à un blocage des pivots qu'il faut prévenir par un nettoyage fréquent demandant d'intervenir lourdement sur le matériel.

Pour remédier à ces inconvénient, on proposé - voir FR-A-2854862 - un bâti de montage pour porte de véhicule comprenant un premier cadre avec des moyens pour sa fixation réglable sur une caisse de véhicule au voisinage de l'ouverture de porte, un second cadre avec des moyens pour le support sur ce second cadre de la porte du véhicule, des bras de liaison du premier au second cadre articulés sur le premier et sur le second cadre pour former avec ces derniers un parallélogramme déformable dans lequel les articulations entre les bras et les cadres sont des articulations sphériques.

Cette disposition est tout à fait satisfaisante en production. Elle requiert, lors de sa construction, une précision importante dans la fixation géométrique des articulations sphériques pour chaque bâti qui, pour l'atteindre, constitue une dépense importante de main d'oeuvre et renchérit le coût de revient des bâtis.

### OBJET DE L'INVENTION

L'invention est un perfectionnement du dispositif selon FR 2 854 862 qui permet de calibrer correctement chaque bâti en quelques minutes, c'est-à-dire d'obtenir rapidement la position des diverses articulations sphériques pour que le panneau de porte soit correctement placé par rapport à la caisse principalement dans le cas où le panneau est rabattu au voisinage de la porte.

### BREVE DESCRIPTION DE L'INVENTION

A cet effet l'invention a donc pour objet un bâti de montage pour porte de véhicule comprenant un premier cadre avec des moyens pour sa fixation réglable sur une caisse de véhicule au voisinage de l'ouverture de porte, un second cadre avec des moyens pour le support sur ce second cadre de la porte du véhicule, des bras de liaison du premier au second cadre articulés sur le premier et sur le second cadre pour former avec ces derniers un quadrilatère déformable, les articulations entre les bras et les cadres comportent au moins une articulation sphérique ménagée entre un élément portant solidaire de l'un des cadre ou bras et un élément porté solidaire de l'un des bras ou cadre, au regard de l'effet de la pesanteur, caractérisé en ce qu'au moins l'un des éléments portant et porté de l'articulation sphérique est solidaire du bras ou cadre correspondant de manière que la position du centre de l'articulation sphérique soit réglable selon les trois directions de l'espace.

Les avantages de cette disposition ressortiront parmi d'autres, de la description donnée d'un bâti conforme à l'invention.

### BREVE DESCRIPTION DES DESSINS

Il sera fait référence aux dessins annexés parmi lesquels:
- la figure 1 illustre l'état de la technique;
- la figure 2 est une représentation de détail d'une réalisation d'une articulation sphérique mise en oeuvre dans l'invention.

### DESCRIPTION DETAILLEE DE L'INVENTION

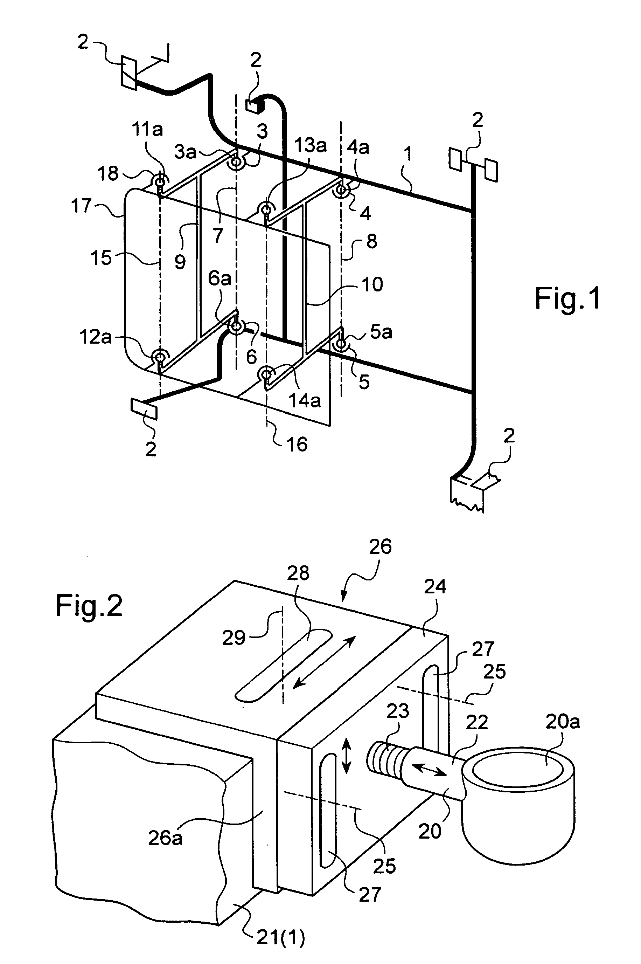

A la figure 1, le cadre destiné à coopérer avec la caisse porte la référence 1. Il est pourvu de moyens 2 pour sa fixation réglable sur la caisse (non représentée) au voisinage de l'ouverture de porte. Ce cadre 1 comprend par exemple quatre boîtiers sphériques 3, 4, 5 et 6, ouverts vers le haut, définissant deux axes 7 et 8. Ces boîtiers parce qu'ouverts vers le haut sont les éléments portant de l'articulation à l'égard de la pesanteur. Ils pourraient être des sphères.

Des bras 9 et 10, ici représentés en forme de H, portent à l'une de leurs extrémités, des sphères 3a, 4a, 5a, 6a qui coopèrent avec les boîtiers susdits. A l'autre extrémité, chacun des bras porte deux sphères 11a, 12a et 13a, 14a, tournées vers le haut. Ces sphères sont les éléments portant de l'articulation et définissent aussi des axes 15 et 16 de rotation pour un cadre 17 de support du panneau de porte non représenté. Le cadre 17 possède des boîtiers sphériques tels que 18 pour coopérer avec les sphères 11a, 12a, 13a, 14a. Ces boîtiers sont ici ouverts vers le bas et sont donc les éléments portés de l'articulation.

Chaque articulation sphérique est connue en elle-même.

Elle possède un élément mâle pourvu d'une sphère et rapporté sur un cadre ou un bras. Elle possède également un élément femelle formé d'un embout tubulaire borgne (boîtier) dont la paroi de fond définit une surface interne hémisphérique du boîtier de même diamètre que la sphère également rapporté sur un cadre ou un bras.

A la figure 2, on a représenté le montage d'un élément femelle 20 formant un boîtier sphérique 20a sur un montant 21 de cadre comme le cadre 1. Cet élément femelle est tourné vers le haut comme tous ceux portés par lé cadre 1. Il comporte un embout 22 qui coopère par vissage avec un goujon 23 solidaire d'une embase 24 ; cette fixation permet, selon le degré de vissage, d'éloigner ou de rapprocher le boîtier sphérique 20a de l'embase 24. Cette dernière est fixée par des vis 25 à l'aile verticale 26a d'une équerre 26, au travers de lumières 27 qui permettent un réglage dans le sens vertical de l'embase 24 sur l'équerre 26. L'aile horizontale de l'équerre 26 est quant à elle fixée sur le montant 21 du cadre 1 au moyen d'une vis 29 traversant une lumière allongée 28 qui permet un réglage de l'ensemble le long du montant 21.

Ainsi la position du boîtier peut-elle être ajustée selon les trois directions de l'espace. Cette description n'a pour but que d'illustrer l'un des nombreux moyens que l'on peut mettre en oeuvre pour réaliser ce réglage. Par exemple, le réglage selon la direction des rainures oblongues 25 peut être remplacé par un jeu de cales insérables entre le montant 21 et l'aile horizontale de l'équerre 26, l'embase 24 étant alors supprimée.

On peut aussi partager les directions de réglage possibles entre le boîtier sphérique et la sphère d'une articulation, si cela est plus simple dans tel cas d'espèce plutôt que dans tel autre.

Le mode opératoire est alors simple : en usine, le cadre 1 est placé dur un mannequin qui représente l'ouverture de caisse. Toutes les articulations sphériques sont en prise et leurs supports sont faiblement serrés de sorte que, sous un effort faible, leur position peut être modifiée.

Le cade 17 porte le panneau de porte à rapporter sur le véhicule de sorte qu'on puisse le rabattre à la main sur le mannequin du bâti dans la position souhaitée. Alors que les moyens de réglage de la positon des articulations sont dans une position moyenne, qui correspond à la position théorique conforme aux plans initiaux de conception du véhicule, l'opérateur fixe le panneau de porte sur le cadre 17 avec des moyens appropriés qui sont prévus sur ce cadre et rapproche ce cadre 17 du cadre 1. Dans cette position, l'opérateur agit sur les moyens de réglage pour placer le cadre 17 dans la position requise qui diffère nécessairement de la position théorique, compte tenu des tolérances de fabrication de l'équipement. Une fois la position correcte atteinte, les moyens de réglage sont immobilisés par serrage ou même par condamnation définitive telle q'une soudure. Le bâti est alors fixé dans la géométrie adaptée pour son utilisation sur une ligne d'assemblage.

Il faut mentionner que ces moyens de réglage sont très avantageux au moment du lancement d'un nouveau véhicule.

En effet, c'est de manière interactive que s'opère la mise au point finale d'une chaine de montage d'un véhicule. Et dans cette phase il n'est pas rare qu'il faille intervenir à la fois sur les outillages et sur la pièce elle-même pour parvenir à une solution satisfaisante et duplicable.

Les libertés de mouvement des articulations, selon l'invention ont pour avantage souvent de limiter le nombre de "retouches" qu'il aurait probablement fallu faire sur la pièce de carrosserie (panneau de porte).

On indiquera de plus que les moyens de réglage seront conçus pour que l'opérateur qui en assure la manutention puisse y accéder par une face du bâti qui est la face extérieure du cadre 1. En effet l'autre face est occupée par le cadre 17 qui est rabattu contre le cadre 1 et surtout qui est occupé par le panneau de porte.

Enfin dans l'exemple décrit, toutes les articulations sont sphériques. Ce n'est pas sortir du cadre de l'invention que d'en conserver certaines cylindriques, celles qui par exemple sont moins exposées aux salissures et dans la mesure où elles présentent un jeu structurel leur permettant d'absorber des variations de position d'un axe de rotation.

## Revendications

1. Bâti de montage pour panneau de porte de véhicule comprenant un premier cadre (1) avec des moyens (2) pour sa fixation réglable sur une caisse de véhicule au voisinage de l'ouverture de porte, un second cadre (17) avec des moyens pour le support sur ce second cadre de la porte du véhicule, des bras de liaison (9,10) du premier au second cadre articulés sur le premier et sur le second cadre pour former avec ces derniers un quadrilatère déformable, les articulations entre les bras (9,10) et les cadres (1,17) étant des articulations dont au moins une est sphérique ménagées entre un élément portant solidaire de l'un des cadre ou bras et un élément porté solidaire de l'un des bras ou cadre, au regard de l'effet de la pesanteur, **caractérisé en ce qu'**au moins l'un des éléments portant et porté de l'articulation sphérique est solidaire du bras (9,10) ou cadre (1,17) correspondant de manière que la position dans l'espace du centre de l'articulation sphérique soit réglable selon les trois directions de l'espace.

2. Bâti selon la revendication 1, **caractérisé en ce que** les moyens de solidarisation réglables desdites articulations sont accessibles par la face du bâti qui est à l'opposé du cadre (17) de support du panneau de porte.

3. Bâti selon l'une des revendications précédentes, **caractérisé en ce que** le réglage des moyens de solidarisation réglables est condamné après ajustement de la géométrie du bâti.

4. Bâti selon l'une des revendications précédentes, **caractérisé en ce que** toutes les articulations du bâti sont sphériques.

## Claims

1. An assembly jig for a vehicle door panel, the jig comprising a first frame (1) with means (2) for adjustably fastening it to a vehicle body in the vicinity of a door opening, a second frame (17) with means for supporting the door of the vehicle on the second frame, link arms (9, 10) between the first and second frames that are hinged to the first and second frames so as to form a deformable quadrilateral in association therewith, the hinges between the arms (9, 10) and the frames (1, 17) being hinges, at least one of which is a ball joint, which are arranged between a carrier element secured to one of the frames or arms and a carried element secured to one of the arms or frames, carrying being relative to the effect of gravity, the jig being **characterized in that** at least one of the carrier and carried ball joint elements is secured to the corresponding arm (9, 10) or frame (1, 17) in such a manner that the position in three-dimensional space of the center of the ball joint is adjustable in three spatial directions.

2. A jig according to claim 1, **characterized in that** the adjustable securing means for said joints are accessible by the face of the jig that is remote from the frame (17) for supporting the door panel.

3. A jig according to anyone of preceding claim, **characterized in that** the adjustment of these adjustable means is locked after the shape of the jig has been adjusted.

4. A jig according to anyone of preceding claim, **characterized in that** all of the hinges of the jig are ball joints.

## Patentansprüche

1. Montagegestell für die Montage der Türfüllung eines Fahrzeugs, umfassend einen ersten Rahmen (1) mit Mitteln (2) zur regelbaren Befestigung des Gestells an einer Fahrzeugkarosserie in der Nähe der Türöffnung, einen zweiten Rahmen (17) mit Mitteln zur Halterung der Fahrzeugtür an diesem zweiten Rahmen, Verbindungsarme (9, 10) zur Verbindung des ersten Rahmens mit dem zweiten Rahmen, wobei die Verbindungsarme am ersten Rahmen und am zweiten Rahmen angelenkt sind, um mit diesen Rahmen ein verformbares Viereck zu bilden, wobei die Gelenke zwischen den Armen (9, 10) und den Rahmen (1, 17) Gelenke sind, von denen mindestens eines kugelförmig ist, und die zwischen einem in Hinblick auf die Wirkung der Schwerkraft tragenden Element, das fest mit einem der Rahmen oder Arme verbunden ist, und einem getragenen Element ausgebildet sind, das mit einem der Arme oder Rahmen verbunden ist, **dadurch gekennzeichnet, dass** mindestens eines der tragenden oder getragenen Elemente des Kugelgelenkes mit dem Arm (9, 10) oder dem entsprechenden Rahmen (1, 17) so verbunden ist, so dass die räumliche Position des Zentrums des Kugelgelenks in den drei Raumrichtungen regelbar ist.

2. Gestell nach Anspruch 1, **dadurch gekennzeichnet, dass** die regelbaren Verbindungsmittel der genannten Gelenke von der Vorderseite des Gestells her, die sich gegenüber dem Rahmen (17) zum Halten der Türfüllung befindet, zugänglich sind.

3. Gestell nach einem der vorhergehenden Ansprüche, **dadurch gekennzeichnet, dass** die Regelung der regelbaren Verbindungsmittel nach Justierung der Geometrie des Gestells verhindert wird.

4. Gestell nach einem der vorhergehenden Ansprüche, **dadurch gekennzeichnet, dass** alle Gelenke des Gestells kugelförmig sind.
